# EUROPÄISCHE PATENTSCHRIFT

(11) **EP 3 134 878 B1**
(45) Veröffentlichungstag und Bekanntmachung des Hinweises auf die Patenterteilung: **15.07.2020**
(21) Anmeldenummer: 14761957.1
(22) Anmeldetag: 11.09.2014
(51) Int. Cl.: G07D 7/20, G07D 7/06

(54) **VERFAHREN ZUM PRÜFEN EINES WERTDOKUMENTS**
METHOD OF CHECKING A VALUE DOCUMENT
PROCEDE DE VERIFICATION D'UN DOCUMENT DE VALEUR

(30) Priorität: 13.09.2013 DE 102013015200
(43) Veröffentlichungstag der Anmeldung: 01.03.2017
(73) Patentinhaber: Giesecke+Devrient Currency Technology GmbH, 81677 München (DE)
(72) Erfinder: FEULNER, Johannes, 81925 München (DE); DOMKE, Jan, 85591 Vaterstetten (DE); HOLL, Norbert, 82110 Germering (DE)
(86) Internationale Anmeldenummer: PCT/EP2014/002466
(87) Internationale Veröffentlichungsnummer: WO 2015/036121

(56) Entgegenhaltungen:
- WO-A1-2008/128755
- DE-A1-102010 021 803
- DE-A1-102011 117 239
- US-A- 5 809 160
- US-A1- 2009 252 381

## Beschreibung

Die vorliegende Erfindung betrifft ein Verfahren zum Prüfen eines Wertdokuments und eine entsprechende Prüfeinrichtung.

Unter Wertdokumenten werden blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten. Die Wertdokumente können sich jeweils durch ihren Typ unterscheiden, beispielsweise im Fall von Banknoten durch die Denomination bzw. den Nennwert und die Währung oder im Fall von Schecks einen durch den Herausgeber der Schecks gegebenen Scheckformulartyp.

Eingerissene oder auseinander gerissene Wertdokumente werden häufig mit Hilfe von Klebestreifen "repariert". Die mit Klebestreifen versehenen Wertdokumente sollen bei der Prüfung der Wertdokumente erkannt und aussortiert werden. Bei den bisherigen Verfahren zur KlebestreifenErkennung wird die Dicke der Wertdokumente überprüft. Die KlebestreifenErkennung wird jedoch durch Schwankungen der detektierten DickenMesswerte erschwert. Wenn außerdem der Klebestreifen sehr dünn ist und/oder das Wertdokument an sich bereits ein ausgeprägtes Dickenprofil aufweist, stößt die bisherige Klebestreifenerkennung an ihre Grenzen.

Ferner treten auch immer wieder Fälschungen von Wertdokumenten auf, die als Composed-Fälschungen bezeichnet werden, d.h. ein gefälschtes Wertdokument, das aus mehreren Wertdokumentteilen zusammengesetzt ist, die an einer Trennlinie aneinander grenzen. Dabei wird ein abgetrennter Teil eines Wertdokuments mit einem Substratabschnitt, beispielsweise einem abgetrennten Teil eines Wertdokuments anderen Typs oder einem geeignet geformten Stück Papier, Folie usw., mit Hilfe von Klebestreifen so verbunden, dass ein Gebilde entsteht, das in etwa die Dimensionen des Wertdokuments aufweist. Durch die Erkennung von Klebestreifen können indirekt auch derartige Composed-Fälschungen erkannt werden. Viele Composed-Fälschungen, auch solche ohne Klebestreifen, können anhand ortsaufgelöster optischer Messverfahren erkannt werden, wie es in der WO2011/147575 A1 oder WO2008/128755 A1 oder DE102010021803 A1 beschrieben ist.

Der vorliegenden Erfindung liegt daher die Aufgabe zugrunde, ein verbessertes Verfahren zum Prüfen eines Wertdokuments auf das Vorliegen einer Composed-Fälschung bereitzustellen.

Die Aufgabe wird gelöst durch ein Verfahren zum Prüfen eines Wertdokuments gemäß den unabhängigen Ansprüchen. Vorteilhafte Weiterbildungen ergeben sich aus den abhängigen Ansprüchen und der Beschreibung.

An einer Vielzahl verschiedener Messpunkte auf dem Wertdokument werden ortsaufgelöst Messwerte des Wertdokuments detektiert, die zweidimensional über das Wertdokument verteilt sind. Es wird ein zweidimensionales Netzwerk von Knotenpunkten gebildet, wobei jeder Knotenpunkt jeweils einem Messpunkt auf dem Wertdokument entspricht. Der an dem jeweiligen Messpunkt detektierte Messwert wird dem diesem Messpunkt entsprechenden Knotenpunkt zugeordnet. Das Knotenpunkt-Netzwerk kann aus Messpunkten gebildet werden, die über das gesamte Wertdokument verteilt sind. Es können aber auch nur die Messpunkte eines Abschnitts des Wertdokuments zur Bildung des Knotenpunkt-Netzwerks verwendet werden. Es kann genau ein Messpunkt pro Knotenpunkt verwendet werden, es können aber auch mehrere (z.B. zueinander benachbarte) Messpunkte für einen Knotenpunkt zusammengefasst werden.

Aus dem zweidimensionalen Knotenpunkt-Netzwerk der Knotenpunkte und zwei zusätzlichen Knotenpunkten, die an zwei einander gegenüberliegenden Seiten des zweidimensionalen Knotenpunkt-Netzwerkes angeordnet sind, wird ein Netzwerk gebildet. Einer der zusätzlichen Knotenpunkte stellt einen Quellen-Knotenpunkt dar, der eine Quelle für einen (virtuellen) Fluss durch das Netzwerk bildet, und der andere einen Senken-Knotenpunkt, der eine Senke für den (virtuellen) Fluss durch das Netzwerk bildet. Bei dem (virtuellen) Fluss handelt es sich lediglich um eine mathematische Hilfsgröße, die keinen physikalischen Fluss (etwa den Fluss eines physikalischen Mediums) beschreibt.

Für jedes Paar aus zwei benachbarten Knotenpunkten des Netzwerks wird jeweils ein Kapazitätswert bestimmt, der ein Maß für den maximal möglichen Fluss zwischen den beiden benachbarten Knotenpunkten ist. Der Kapazitätswert des jeweiligen Knotenpunkt-Paars ergibt sich durch miteinander vergleichen der Messwerte der zwei benachbarten Knotenpunkte, Ermitteln jeweils eines Kapazitätswerts auf Basis dieses Vergleichs und Zuordnen des jeweiligen Kapazitätswerts zu einer Verbindungslinie zwischen den beiden benachbarten Knotenpunkten des jeweiligen Paars benachbarter Knotenpunkte, deren Messwerte miteinander verglichen wurden. Auf Basis der ermittelten Kapazitätswerte wird dann unter Zuhilfenahme eines numerischen Optimierungsverfahrens der maximal mögliche Fluss von dem Quellen-Knotenpunkt durch das Netzwerk hindurch zu dem Senken-Knotenpunkt berechnet. Und in Abhängigkeit des berechneten maximal möglichen Flusses durch das Netzwerk wird das Wertdokument als fälschungsverdächtig oder nicht-fälschungsverdächtig klassifiziert, insbesondere im Hinblick auf das Vorliegen einer Composed-Fälschung.

Der maximal mögliche Fluss durch das Netzwerk ist ein Maß dafür, mit welcher Wahrscheinlichkeit das Wertdokument entlang einer Richtung quer (d.h. schräg oder senkrecht) zur Richtung des Netzwerks ein durchgehendes Objekt aufweist, das auf eine Manipulation des Wertdokuments hinweist, wie z.B. ein Klebestreifen oder eine Trennlinie einer Composed-Fälschung. Durchgehend bedeutet, dass sich das Objekt von einer Wertdokumentkante zur gegenüberliegenden Wertdokumentkante erstreckt (oder zumindest eine Ausdehnung aufweist, die nahezu der Größe des Knoten-Netzwerks in dieser Richtung entspricht. Das Objekt kann dabei geradlinig oder auch kurvig ausgebildet sein. Bei einem geringen maximal möglichen Fluss wird auf eine große Wahrscheinlichkeit für das Vorhandensein eines durchgehenden oder lang ausgedehnten Objekts geschlossen, bei einem großen maximal möglichen Fluss entsprechend auf eine geringe Wahrscheinlichkeit für das Vorhandensein eines durchgehenden oder lang ausgedehnten Objekts (z.B. Klebestreifen und/oder Trennlinie). Da der maximal mögliche Fluss besonders sensitiv auf solche durchgehenden Objekten ist, und die meisten Composed-Fälschungen ein durchgehendes Objekt (Trennlinie und/oder Klebestreifen) aufweisen, ist das erfindungsgemäße Verfahren sehr gut zur Erkennung von Composed-Fälschungen geeignet.

Das Klassifizieren kann dadurch erfolgen, dass der maximal mögliche Fluss durch das Netzwerk mit einer Flussschwelle verglichen wird und das Wertdokument als fälschungsverdächtig klassifiziert wird, falls der maximal mögliche Fluss die Flussschwelle unterschreitet oder erreicht und als nicht-fälschungsverdächtig, falls der maximal mögliche Fluss die Flussschwelle überschreitet. Der maximal mögliche Fluss kann aber auch zusammen mit weiteren Indikatoren für das Vorliegen einer Composed-Fälschung ausgewertet werden, um daraus eine resultierende Fälschungs-Wahrscheinlichkeit für das jeweilige Wertdokument abzuleiten.

Bei dem erfindungsgemäßen Verfahrens wird nicht für jeden einzelnen Messpunkt eine binäre Entscheidung darüber getroffen, ob dieser Messpunkt fälschungsverdächtig ist oder nicht, sondern es wird ein ganzheitlicherer Ansatz verfolgt, der das gesamte oder zumindest einen großen Teil des Wertdokuments berücksichtigt. Dies wird erreicht durch die Bestimmung der jeweiligen Kapazitäten für den Fluss und die Berechnung des maximal möglichen Flusses. Dieser gibt darüber Auskunft, wie sicher die Entscheidung, ob das Wertdokument fälschungsverdächtig ist oder nicht, getroffen wird. Durch Wahl der Flussschwelle kann daher - je nach Wunsch des Benutzers des Verfahrens - gewählt werden, ob die Prüfung strenger oder weniger streng erfolgen soll.

Bei der Berechnung des maximal möglichen Flusses durch das Netzwerk wird z.B. angenommen, dass zwischen dem Quellen-Knotenpunkt und den diesem benachbarten Knotenpunkten des Netzwerks jeweils eine Verbindungslinie besteht, die eine Nennkapazität C aufweist und dass zwischen dem Senken-Knotenpunkt und den diesem benachbarten Knotenpunkten des Netzwerks jeweils eine Verbindungslinie besteht, die die Nennkapazität C aufweisen.

Zur Berechnung des maximal möglichen Flusses wird ein numerisches Optimierungsverfahren verwendet, bei dem der Fluss durch das Netzwerk unter den folgenden Bedingungen maximiert wird:
a) dass der Fluss durch jede Verbindungslinie zwischen zwei Knotenpunkten höchstens so groß ist wie die Kapazität cᵢⱼ zwischen diesen zwei Knotenpunkten, und
b) dass für jeden der Knotenpunkte, ausgenommen für den Quellen-Knotenpunkt und den Senken-Knotenpunkt, gilt, dass der in den jeweiligen Knoten hineinfließende Fluss gleich groß ist wie der aus dem jeweiligen Knoten herausfließende Fluss (Flusserhaltung), und
c) dass der Fluss, der in den Senken-Knotenpunkt hineinfließt, genauso groß ist wie der Fluss, der aus dem Quellen-Knotenpunkt herausfließt.

Für jeden der Messpunkte auf der Banknote wird ein Knotenpunkt definiert, dem der an dem jeweiligen Messpunkt detektierte Messwert zugeordnet wird. Dabei erhält der Knotenpunkt entweder den detektierten Messwert selbst oder den Messwert abzüglich eines Offsets oder einen davon abgeleiteten Wert. Als Offset kann z.B. der durchschnittliche Messwert des jeweiligen Wertdokuments abgezogen werden oder eine im Rahmen eines parametrischen Modells erwartete Verteilung der Messwerte für den jeweiligen Wertdokumenttyp in der jeweiligen Lage des Wertdokuments. Das parametrische Modell basiert auf Lerndaten, die für den jeweiligen Wertdokumenttyp ermittelt wurden, kann mittels Hauptachsentransformation erhalten werden und liefert die bestmögliche Approximation der jeweiligen Verteilung der Messwerte auf dem jeweiligen Wertdokument. Dem jeweiligen Knotenpunkt wird dann der an dem jeweiligen Messpunkt detektierte Messwert abzüglich des im Rahmen des parametrischen Modells für den jeweiligen Messpunkt erwarteten Messwerts zugeordnet. Dies hat den Vorteil, dass erwartete Messwertvariationen innerhalb des betreffenden Wertdokuments (z.B. aufgrund des Druckbilds oder aufgrund von Echtheitsmerkmalen wie z.B. des Wasserzeichens oder Sicherheitsfadens) herausgerechnet werden und damit die Berechnung des maximal möglichen Flusses nicht beeinflussen.

Bei dem zur Berechnung des maximal möglichen Flusses verwendeten numerischen Optimierungsverfahren kann ein minimaler Schnitt durch das Netzwerk ermittelt werden, welcher ein Art "Flaschenhals" für den Fluss durch das Netzwerk bildet. Der minimale Schnitt ist derjenige Abschnitt des Wertdokuments, der für den maximalen Fluss durch das Netzwerk begrenzend wirkt. Die Position des minimalen Schnitts durch das Netzwerk lässt sich dann zur Bestimmung einer Position des auf eine Manipulation hinweisenden Objekts (z.B. Klebestreifen und/oder Trennlinie) auf dem Wertdokument verwenden. Die anhand des minimalen Schnitts ermittelte Position dieses Objekts kann vorteilhaft dazu verwendet werden, das Wertdokument mit Hilfe weiterer Verfahren auf das Vorliegen einer Composed-Fälschung zu prüfen. Zum weiteren Prüfen auf das Vorliegen einer Composed-Fälschung wird z.B. angenommen, dass im Bereich der ermittelten Position des Klebestreifens die Trennlinie der Composed-Fälschung verläuft. Insbesondere können dazu Messwerte der beiden durch den Klebestreifen bzw. die Trennlinie getrennten Wertdokumentteile miteinander verglichen werden. Zum Beispiel werden hierzu Dickenmesswerte oder optische Messwerte der beiden Wertdokumentteile miteinander verglichen, um zu prüfen, ob die beiden Wertdokumentteile unterschiedliche optische Transmission, unterschiedliche Fluoreszenz oder unterschiedliche Flächengewichte haben.

Der Quellen-Knotenpunkt und der Senken-Knotenpunkt des Knoten-Netzwerks werden an einander gegenüberliegenden Seiten des Netzwerks platziert. Bevorzugt sind sie so angeordnet, dass der maximal mögliche Fluss durch das Netzwerk entlang einer Richtung berechnet wird, die auf dem Wertdokument der Richtung entspricht, die senkrecht zur Längsrichtung typischer Klebestreifen/Trennlinien von Composed-Fälschungen verläuft. Wenn der Klebestreifen/ die Trennlinie z.B. typischerweise parallel zu den kürzeren Seiten des (rechteckigen) Wertdokuments verlaufen, werden der Quellen- und Senken-Knotenpunkt benachbart zu den kürzeren Seiten des Wertdokuments platziert und der maximal mögliche Fluss entlang der Längsrichtung des Wertdokuments berechnet.

Um das Wertdokument auf das Vorhandensein von Objekten (Trennlinie/Klebestreifen) unterschiedlicher Orientierung zu prüfen, wird der maximal mögliche Fluss durch das Netzwerk sowohl für eine erste Richtung durch das Netzwerk, als auch für eine zur ersten Richtung senkrecht verlaufende zweite Richtung berechnet. Die erste Richtung kann z.B. der Längsrichtung des Wertdokuments entsprechen und die zweite Richtung der Querrichtung des Wertdokuments.

In einem bevorzugten Verfahren wird für die erste Richtung ein erster maximal möglicher Fluss durch das Netzwerk berechnet und für die zweite Richtung ein zweiter maximal möglicher Fluss durch das Netzwerk berechnet. Anschließend wird der erste maximal mögliche Fluss durch das Netzwerk auf Basis der Anzahl der Knotenpunkte, die das Netzwerk entlang der ersten Richtung aufweist, normiert (z.B. wird der erste Fluss durch Knotenpunktanzahl entlang der ersten Richtung dividiert). Und es wird der zweite maximal mögliche Fluss durch das Netzwerk auf Basis der Anzahl der Knotenpunkte, die das Netzwerk entlang der zweiten Richtung aufweist, normiert (z.B. wird der zweite Fluss durch die Knotenpunktanzahl entlang der zweiten Richtung dividiert). Der normierte erste maximal mögliche Fluss und der normierte zweite maximal mögliche Fluss werden anschließend miteinander verglichen und in Abhängigkeit des kleineren dieser beiden normierten maximal möglichen Flüsse wird das Wertdokument als fälschungsverdächtig oder nicht-fälschungsverdächtig klassifiziert. Zum Beispiel wird der kleinere des ersten und zweiten normierten maximalen Flusses mit einer Flussschwelle verglichen und das Wertdokument als fälschungsverdächtig klassifiziert, falls der kleinere der beiden normierten maximal möglichen Flüsse die Flussschwelle nicht überschreitet und als nicht-fälschungsverdächtig, falls er die Flussschwelle überschreitet.

Die Wertdokumentbearbeitungsvorrichtung sortiert das betreffende Wertdokument dann z.B. in den Ausgabeabschnitt der Vorrichtung, in dem fälschungsverdächtige Wertdokumente abgelegt werden. Anschließend wird das fälschungsverdächtige Wertdokument - durch eine Person oder maschinell - genauer untersucht, ob es sich tatsächlich um eine Composed-Fälschung handelt.

Das erfindungsgemäße Verfahren kann aber auch zur Fitnessprüfung der Wertdokumente eingesetzt werden. Bevorzugt werden die Wertdokumente dazu sowohl durch das erfindungsgemäße Verfahren als auch mit Hilfe weiterer Verfahren auf das Vorhandensein von Klebestreifen geprüft, z.B. mit Hilfe einer spurbasierten Dickenmessung. Die Ergebnisse der verschiedenen Klebestreifen-Prüfungen können kombiniert werden und in eine endgültige Fitnessbeurteilung des jeweiligen Wertdokuments einfließen.

Zum Bestimmen des jeweiligen Kapazitätswerts der jeweiligen zwei benachbarten Knotenpunkte Kᵢ, Kⱼ des Netzwerks, werden die Messwerte dieser beiden Knotenpunkte mit einem Sollwert S oder einem Sollbereich B des jeweiligen Messwerts verglichen. Der Sollwert S/der Sollbereich B kann für beide Messwerte gleich sein oder auch individuell gewählt werden, z.B. in Abhängigkeit der oben genannten erwarteten Messwertvariationen innerhalb des Wertdokuments. Der Kapazitätswert cᵢⱼ der Verbindungslinie zwischen diesen beiden Knotenpunkten Kᵢ, Kⱼ wird in Abhängigkeit desjenigen dieser beiden Messwerte Iᵢ, Iⱼ gewählt, der eine größere Abweichung von dem Sollwert S/von dem Sollbereich B aufweist als der andere dieser beiden Messwerte. Der Kapazitätswert cᵢⱼ wird z.B. dadurch gewählt, dass für den Kapazitätswert, als Funktion des Messwerts mit der größeren Abweichung, eine stufenförmige Funktion angenommen wird, die in einem den Sollwert umgebenden Sollbereich ihren maximalen Wert aufweist. Die stufenförmig abfallende Funktion weist bevorzugt einen nicht-abrupten Stufenverlauf auf, da ein solcher fehlertoleranter ist als ein abrupter stufenförmiger Verlauf. Diese stufenförmige Funktion ist bevorzugt so ausgebildet, dass sie, als Funktion des Messwerts mit der größeren Abweichung, auf einer oder auf beiden Seiten des Sollbereichs B stufenförmig abfällt.

Zum Bestimmen des jeweiligen Kapazitätswerts der zwei benachbarten Knotenpunkte des Netzwerks wird, falls der Messwert mit der größeren Abweichung innerhalb des Sollbereichs B liegt, als Kapazitätswert eine Nennkapazität C>0 verwendet. Und falls der Messwert mit der größeren Abweichung außerhalb des Sollbereichs liegt, wird als Kapazitätswert eine (z.B. als Funktion dieses Messwerts kontinuierlich variierende) Kapazität c verwendet, die geringer ist als die Nennkapazität C, wobei 0<c<C. Die Lage des Sollwerts S/des Sollbereichs B wird z.B. in Abhängigkeit eines durchschnittlichen Messwerts mehrerer Messpunkte des Wertdokument gewählt.

Für die Erfindung sind alle Messmethoden geeignet, die einen Hinweis liefern auf ein auf eine Manipulation des Wertdokuments hinweisendes Objekt einer Composed-Fälschung (Trennlinie, Klebestreifen). Da die beiden Wertdokumentteile der Composed-Fälschung im Allgemeinen aus unterschiedlichen Materialien hergestellt sind, haben sie üblicherweise auch eine unterschiedliche Dicke, Leitfähigkeit, Kapazität, sowie unterschiedliche optische und ggf. magnetische Eigenschaften. Damit ergibt sich an der Trennlinie von Composed-Fälschungen im Allgemeinen ein Sprung des jeweiligen Messwerts. Ist die Trennlinie zusätzlich durch einen Klebestreifen verstärkt, so verändert im Allgemeinen auch der Klebestreifen die Messwerte an diesen Messpunkten, z.B. die Dickenmesswerte oder auch die optischen Messwerte.

Die Messwerte können insbesondere Messwerte der elektromagnetischen Strahlung sein, z.B. optische Messwerte, die durch eine ortsaufgelöste optische Messung des Wertdokuments detektiert werden, z.B. durch eine ortsaufgelöste Transmissions-, Remissions- oder Lumineszenzmessung des Wertdokuments, z.B. im sichtbaren, UV- oder IR-Spektralbereich. Die Messwerte können aber auch durch eine ortsaufgelöste Messung der elektromagnetischen Strahlung des Wertdokuments im thermischen IR- oder Terahertz-Spektralbereich detektiert werden, in Remission oder Transmission.

Die Messwerte können aber auch
- Ultraschall-Messwerte sein, die durch eine ortsaufgelöste Ultraschall-Transmissions- oder Ultraschall-Remissionsmessung des Wertdokuments detektiert werden, oder
- Dickenmesswerte des Wertdokuments sein, die durch eine ortsaufgelöste mechanische Dickenmessung oder eine ortsaufgelöste Ultraschall-Transmissions- oder -Remissionsmessung des Wertdokuments detektiert werden, insbesondere mittels einer Puls-Echo- oder Sonar-Methode, oder
- Kapazitäts-Messwerte sein, die durch eine ortsaufgelöste Kapazitätsmessung des Wertdokuments detektiert werden, oder
- Leitfähigkeits-Messwerte sein, die durch eine ortsaufgelöste Leitfähigkeitsmessung des Wertdokuments detektiert werden, oder
- magnetische Messwerte sein, die durch eine ortsaufgelöste magnetische Messung des Wertdokuments detektiert werden.

Die Messwerte können aber auch kombinierte Messwerte sein, in die jeweils mindestens zwei oder mehr verschiedene Messwerte des Wertdokuments einfließen, die mit verschiedenen Messmethoden ortsaufgelöst an dem Wertdokument detektiert wurden. Zum Beispiel kann der kombinierte Messwert des jeweiligen Messpunkts aus mindestens einem Messwert der elektromagnetischen Strahlung und mindestens einem Ultraschall-Messwert kombiniert werden, der dem jeweiligen Messpunkt auf dem Wertdokument zugeordnet ist. Zum Kombinieren können die an dem jeweilige Messpunkt detektierten Messwerte selbst oder aus den Messwerten abgeleitete Werte miteinander verrechnet werden und daraus resultierend - wie oben beschrieben - der jeweilige Kapazitätswert zugewiesen werden. Alternativ kann für jede Messmethode zunächst eine messmethodenspezifische "Kapazitätskarte" (Netzwerk) gebildet werden, die anschließend zu einer gemeinsamen Karte zusammengeführt werden, indem für die einander entsprechenden Kanten entweder die jeweils niedrigere Kapazität oder eine kombinierte Kapazität verwendet wird.

In einem Ausführungsbeispiel werden als Messwerte Ultraschall-Messwerte verwendet. Zum Bestimmen des jeweiligen Kapazitätswerts der jeweiligen zwei benachbarten Knotenpunkte des Netzwerks werden die Ultraschall-Messwerte dieser beiden Knotenpunkte miteinander verglichen und der Kapazitätswert in Abhängigkeit des kleineren bzw. des größeren dieser beiden Ultraschall-Messwerte gewählt. Als Ultraschall-Messwert kann der Phasenversatz des Ultraschalls verwendet werden, der bei Transmission durch das Wertdokument auftritt, oder die Ultraschall-Intensität, die durch das Wertdokument transmittiert wird. Falls der Ultraschall-Messwert die Ultraschall-Intensität ist, wird der Kapazitätswert in Abhängigkeit des kleineren dieser beiden Ultraschall-Intensitäten gewählt. Falls der Ultraschall-Messwert der Ultraschall-Phasenversatz ist, wird der Kapazitätswert in Abhängigkeit des größeren dieser beiden Ultraschall-Phasenversätze gewählt. Der Kapazitätswert wird z.B. dadurch in Abhängigkeit der kleineren dieser beiden Ultraschall-Intensitäten gewählt, dass für den Kapazitätswert als Funktion der kleineren der beiden Ultraschall-Intensitäten eine stufenförmig ansteigende Funktion angenommen wird.

Zum Beispiel werden zum Bestimmen des jeweiligen Kapazitätswerts der zwei benachbarten Knotenpunkte des Netzwerks, die Ultraschall-Intensitäten dieser beiden Knotenpunkte miteinander verglichen und die kleinere dieser beiden Ultraschall-Intensitäten mit einer Intensitätsschwelle I' verglichen. Falls die kleinere der beiden Ultraschall-Intensitäten die Intensitätsschwelle I' überschreitet, wird als Kapazitätswert eine Nennkapazität C>0 verwendet, und falls die kleinere der beiden Ultraschall-Intensitäten die Intensitätsschwelle I' nicht überschreitet, wird als Kapazitätswert eine geringere Nennkapazität c, mit 0<c<C, verwendet. Die Intensitätsschwelle, mit der die kleinere der beiden Ultraschall-Intensitäten verglichen wird, wird bevorzugt in Abhängigkeit der durchschnittlich durch das Wertdokument hindurch transmittierten Ultraschall-Intensität gewählt. Insbesondere kann als Intensitätsschwelle die durchschnittlich durch das Wertdokument hindurch transmittierte Ultraschall-Intensität verwendet werden. Alternativ kann aber auch eine vorbestimmte Intensitätsschwelle verwendet werden.

Außerdem wird vorzugsweise für einen Messpunkt, der eine sehr große transmittierte Ultraschall-Intensität aufweist, z.B. eine Ultraschall-Intensität, die eine vorgegebene Riss-Schwelle IR überschreitet, angenommen, dass dieser Messpunkt im Bereich eines Risses des Wertdokuments liegt. Für die Riss-Schwelle gilt dabei I_{R}>>I'. Für den diesem Messpunkt zugeordneten Knotenpunkt wird dann die detektierte, sehr große Ultraschall-Intensität durch eine geringe Ultraschall-Intensität ersetzt, die geringer ist als die Intensitätsschwelle I'. Dadurch kann mit Hilfe des erfindungsgemäßen Verfahrens auch eine Composed-Fälschung erkannt werden, die einen Klebestreifen aufweist, der einen Riss nur teilweise abdeckt, wobei der Riss sich aber über den Klebestreifen hinaus fortsetzt.

Falls als Ultraschall-Messwert der Phasenversatz des Ultraschalls verwendet wird, wird dazu an dem jeweiligen Messpunkt des Wertdokuments bevorzugt der Phasenunterschied relativ zu einer Referenzphase bestimmt, die zu solchen Zeitpunkten detektiert wird, zu denen sich kein Wertdokument zwischen den Ultraschallsendern und den Ultraschallempfängern des Ultraschallsensors befindet, z.B. in der Lücke zweier durch den Erfassungsbereich des Ultraschallsensor hindurch transportierter Wertdokumente. Umgekehrt zur Intensität, führt der Klebestreifen zu einem größeren Phasenversatz als in den Wertdokumentbereichen ohne Klebestreifen. Der jeweilige Kapazitätswert zweier benachbarter Knotenpunkte erhält dann die große Nennkapazität C, wenn der größere der beiden Phasenversätze der beiden Knotenpunkte eine Phasenversatz-Schwelle nicht überschreitet, und die kleinere Nennkapazität c, mit 0<c<C, falls der größere der beiden Phasenversätze die Phasenversatz-Schwelle überschreitet. Alternativ kann auch für den Phasenversatz als Funktion des größeren der beiden Phasenversätze eine stufenförmig abfallende Funktion verwendet werden. Im Fall eines Messpunkts des Wertdokuments, der einen sehr geringen oder nahezu verschwindenden Phasenversatz aufweist, wird angenommen, dass das Wertdokument dort einen Riss aufweist. Für den diesem Messpunkt zugeordneten Knotenpunkt wird dann der detektierte, sehr geringe Ultraschall-Phasenversatz durch einen großen Ultraschall-Phasenversatz ersetzt. Auf diese Weise kann mit Hilfe des erfindungsgemäßen Verfahrens auch eine Composed-Fälschung erkannt werden, die einen Klebestreifen aufweist, der einen Riss nur teilweise abdeckt, wobei der Riss sich aber über den Klebestreifen hinaus fortsetzt.

Die Erfindung betrifft auch eine Prüfeinrichtung zur Prüfung von Wertdokumenten, die zur Durchführung des erfindungsgemäßen Verfahrens ausgebildet ist. Die Prüfeinrichtung umfasst einen Sensor, der zum ortsaufgelösten Detektieren von Messwerten an einer Vielzahl verschiedener Messpunkte auf dem Wertdokument ausgebildet ist. Zum Beispiel weist der Sensor mehrere Messspuren quer zu einer Transportrichtung des Wertdokuments auf, entlang der das zu prüfende Wertdokument an dem Sensor vorbeitransportiert wird. Der Sensor weist Messeinrichtungen entsprechend seiner verwendeten Messmethode auf (vgl. die oben genannten Messmethoden). Die Prüfeinrichtung umfasst außerdem eine Auswerteeinrichtung, die dazu ausgebildet ist, das Wertdokument in Abhängigkeit des berechneten maximal möglichen Flusses durch das Netzwerk als fälschungsverdächtig oder nicht-fälschungsverdächtig zu klassifizieren.

Die detektierten Messwerte können in Abhängigkeit des Wertdokumenttyps des Wertdokuments ausgewertet werden. In Abhängigkeit des Wertdokumenttyps können z.B. bestimmte Abschnitte des Wertdokuments bei der Prüfung des Wertdokuments ausgenommen werden, d.h. nicht berücksichtigt werden, z.B. Abschnitte, in denen das Wertdokument ein Folienelement hat. Falls die detektierten Intensitäten mit einer Intensitätsschwelle verglichen werden, kann die Intensitätsschwelle I' in Abhängigkeit des Wertdokumenttyps gewählt werden, wobei für dicke Wertdokumente eine größere Intensitätsschwelle I' verwendet wird als für dünne Wertdokumente.

Die Auswerteeinrichtung kann zum Durchführen des Prüfens insbesondere einen Prozessor, beispielsweise einen Mikrocontroller oder einen digitalen Signalprozessor, und/oder ein FPGA sowie einen Speicher enthalten. In dem Speicher können insbesondere Instruktionen eines Computerprogramms gespeichert sein, bei deren Ausführung durch den Prozessor Verfahrensschritte des erfindungsgemäßen Verfahrens nach der Detektion der Messwerte ausgeführt werden. Die Auswerteeinrichtung kann mit dem Sensor im selben Gehäuse untergebracht sein oder räumlich getrennt von diesem.

Weiterer Gegenstand der Erfindung ist eine Vorrichtung zur Bearbeitung von Wertdokumenten, vorzugsweise zur Sortierung von Wertdokumenten, mit
- einer Zuführeinrichtung für zu bearbeitende Wertdokumente,
- einer Ausgabeeinrichtung für Wertdokumente, die wenigstens zwei Ausgabeabschnitten zur Aufnahme bearbeiteter Wertdokumente aufweist,
- einer Transporteinrichtung zum Transportieren von einzelnen Wertdokumenten von der Zuführeinrichtung entlang eines Transportpfades zu der Ausgabeeinrichtung,
- einer erfindungsgemäßen Prüfeinrichtung zur Klassifizierung des Wertdokuments als fälschungsverdächtig oder nicht-fälschungsverdächtig, die so angeordnet ist, dass der Transportpfad durch einen Erfassungsbereich des Sensors verläuft, und
- einer Steuereinrichtung, die, in Abhängigkeit von der Klassifizierung des Wertdokuments durch die Prüfeinrichtung, für ein von der Transporteinrichtung transportiertes Wertdokument die Transporteinrichtung so ansteuert, dass das Wertdokument in einen ersten der Ausgabeabschnitte oder in einen zweiten der Ausgabeabschnitte transportiert wird.

Die Erfindung wird weiter beispielhaft an Hand der folgenden Figuren erläutert. Es zeigen:
- Fig. 1: eine schematische Darstellung einer Banknotenbearbeitungsvorrichtung,
- Fig. 2: eine schematische Darstellung eines Ultraschallsensors der Banknotenbearbeitungsvorrichtung in Fig. 1 mit einer Steuer- und Auswerteeinrichtung in einer Ansicht entlang einer Transportrichtung von Banknoten,
- Fig. 3: eine schematische Darstellung einer Banknote mit Klebestreifen (Fig. 3a), der Verlauf der transmittierten Ultraschall-Intensität entlang der Längsrichtung der Banknote (Fig. 3b), ein Netzwerk von Knotenpunkten für die Banknote aus Fig. 3a (Fig. 3c) und eine Veranschaulichung der Kapazitätswerte der Paare benachbarter Knotenpunkte (Fig. 3d),
- Fig. 4: die Verfahrensschritte des erfindungsgemäßen Verfahrens,
- Fig. 5: eine nicht-abrupte Stufenfunktion zum Bestimmen der Kapazitätswerte als Funktion der kleineren der beiden Intensitäten eines Knotenpunkt-Paars,
- Fig. 6: eine zu beiden Seiten eines Sollbereichs abfallende Stufenfunktion zum Bestimmen des Kapazitätswertes der Knotenpunkt-Paare.

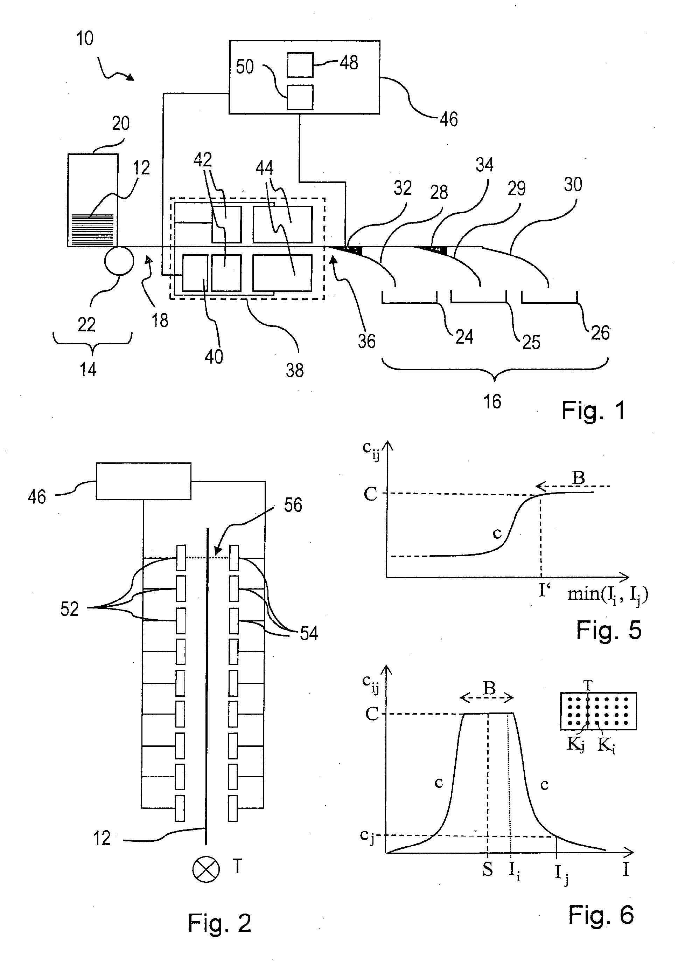

In Fig. 1 ist eine Wertdokumentbearbeitungsvorrichtung 10 zur Sortierung von Wertdokumenten gezeigt, im Beispiel eine Vorrichtung zur Bearbeitung von Banknoten. Sie verfügt über eine Zuführeinrichtung 14 zur Zuführung der Wertdokumente, eine Ausgabeeinrichtung 16 zur Aufnahme bearbeiteter, d.h. sortierter Wertdokumente, und eine Transporteinrichtung 18 zum Transportieren von einzelnen Wertdokumenten von der Zuführeinrichtung 14 zu der Ausgabeeinrichtung 16. Die Zuführeinrichtung 14 umfasst im Beispiel ein Eingabefach 20 für einen Wertdokumentstapel und einen Vereinzeler 22 zur Vereinzelung der Wertdokumente des Wertdokumentstapels aus dem Eingabefach 20. Die Ausgabeeinrichtung 16 umfasst in diesem Beispiel drei Ausgabeabschnitte 24, 25 und 26, in die bearbeitete Wertdokumente je nach dem Ergebnis der Bearbeitung sortiert werden können. Jeder der Ausgabeabschnitte umfasst ein Stapelfach und ein (nicht gezeigtes) Stapelrad, mittels dessen zugeführte Wertdokumente in dem Stapelfach abgelegt werden können. Die Transporteinrichtung 18 verfügt über wenigstens zwei, im Beispiel drei Zweige 28, 29 und 30, an deren Enden jeweils einer der Ausgabeabschnitte 24, 25, 26 angeordnet ist. An den Verzweigungen sind über durch Stellsignale steuerbare Weichen 32 und 34 vorhanden, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14 und der in Transportrichtung ersten Weiche 32 nach dem Vereinzeler 22 ist eine Sensoreinrichtung 38 angeordnet, die während des Vorbeitransports von Wertdokumenten physikalische Eigenschaften der Wertdokumente detektiert und die Messergebnisse wiedergebende Sensorsignale bildet. In diesem Beispiel verfügt die Sensoreinrichtung 38 über drei Sensoren, nämlich einen optischen Remissionssensor 40, der ein Remissionsbild des Wertdokuments erfasst, einen optischen Transmissionssensor 42, der ein Transmissionsbild des Wertdokuments erfasst, und einen Transmissionsultraschallsensor 44, der Ultraschall-Messwerte des jeweiligen Wertdokuments in Transmission detektiert. Die Messpunkte, an denen die Ultraschall-Messwerte detektiert werden, sind zweidimensional über das jeweils geprüfte Wertdokument verteilt.

Der Ultraschallsensor kann den Ultraschall kontinuierlich oder in Pulsen auf das Wertdokument abgeben und den durch das Wertdokument transmittierten Ultraschall erfassen. Unter Ultraschall wird im Rahmen der vorliegenden Erfindung Schall verstanden, der eine Frequenz größer als 20 kHz, vorzugsweise größer als 40 kHz aufweist. Besonders bevorzugt liegt die Frequenz des Ultraschalls unter 800 kHz. Werden Ultraschallpulse verwendet, so wird dabei unter der Frequenz der arithmetische Mittelwert über die Frequenzen des Pulses verstanden.

Eine Steuer- und Auswerteeinrichtung 46 ist über Signalverbindungen mit der Sensoreinrichtung 38 und der Transporteinrichtung 18, insbesondere den Weichen 32 und 34, verbunden. In Verbindung mit der Sensoreinrichtung 38 klassifiziert sie in Abhängigkeit von den Sensorsignalen der Sensoreinrichtung 38 das jeweilige geprüfte Wertdokument in eine von vorgegebenen Sortierklassen und steuert durch Abgabe von Stellsignalen die Weichen 32 bzw. 34 so an, dass das Wertdokument entsprechend seiner bei der Klassifizierung ermittelten Sortierklasse in einen der Klasse zugeordneten Ausgabeabschnitt ausgegeben wird. Die Zuordnung zu einer der vorgegebenen Sortierklassen erfolgt in Abhängigkeit von wenigstens einem vorgegebenen Sortierkriterium. Zum Beispiel werden die Wertdokumente dabei nach Echtheit und ggf. nach Wertdokumenttyp und/oder Zustand (Fit/Unfit) sortiert.

Die Steuer- und Auswerteeinrichtung 46 verfügt über entsprechende Schnittstellen für die Sensoreinrichtung 38 und über einen Prozessor 48 und einen mit dem Prozessor 48 verbundenen Speicher 50, in dem wenigstens ein Computerprogramm mit Programmcode gespeichert ist, bei dessen Ausführung der Prozessor 48 die Vorrichtung steuert bzw. die Sensorsignale zur Ermittlung einer Sortierklasse eines geprüften Wertdokuments auswertet und entsprechend der Auswertung die Transporteinrichtung 18 ansteuert. Zum Beispiel ermittelt die Steuer- und Auswerteeinrichtung 46 aus den analogen oder digitalen Sensorsignalen der Sensoren der Sensoreinrichtung 38 bei einer Sensorsignalauswertung wenigstens eine Wertdokumenteigenschaft, die für die Überprüfung der Banknoten in Bezug auf deren Echtheit und/oder Zustand relevant ist. Vorzugsweise werden mehrere dieser Eigenschaften zur Überprüfung herangezogen, z.B. optische Eigenschaften und akustische Eigenschaften des Wertdokuments. In Abhängigkeit der ermittelten Eigenschaften ermittelt die Steuer- und Auswerteeinrichtung 46 dann ein Gesamtergebnis für die Prüfung des jeweiligen Wertdokuments und sendet in Abhängigkeit von dem Ergebnis ein Steuersignal für die Weichen 32, 34.

Zur Bearbeitung von Wertdokumenten 12 werden in das Eingabefach 20 eingelegte Wertdokumente 12 von dem Vereinzeler 22 vereinzelt und der Transporteinrichtung 18 zugeführt, die die vereinzelten Wertdokumente 12 an der Sensoreinrichtung 38 vorbeitransportiert. Diese erfasst die Eigenschaften der Wertdokumente 12, wobei Sensorsignale gebildet werden, die die Eigenschaften des jeweiligen Wertdokuments wiedergeben. Die Steuer- und Auswerteeinrichtung 46 erfasst die Sensorsignale, ermittelt in Abhängigkeit von diesen eine Sortierklasse des jeweiligen Wertdokuments und steuert in Abhängigkeit von dem Ergebnis die Weichen so an, dass die Wertdokumente entsprechend der ermittelten Sortierklasse in einen der jeweiligen Sortierklasse zugeordneten Ausgabeabschnitt transportiert wird.

Im ersten Ausführungsbeispiel wird die Sortierklasse auf der Basis von Ultraschalleigenschaften des Wertdokuments ermittelt. Dazu dient der Transmissionsultraschallsensor 44, der in diesem Beispiel folgendermaßen aufgebaut ist (vgl. Fig. 2): Der Sensor 44 verfügt über mehrere Ultraschallwandler 52, die in einer Ebene parallel zum Transportpfad 36 der transportierten Wertdokumente 12 angeordnet sind. Durch die Steuer- und Auswerteeinrichtung 46 werden die Ultraschallwandler 52 zur Abgabe von Ultraschallpulsen auf die Banknote angesteuert und dienen somit als Ultraschallsender. Den Ultraschallwandlern bzw. -sendern 52 in Bezug auf den Transportpfad 36 gegenüber sind in gleicher Zahl als Ultraschallempfänger dienende Ultraschallwandler 54 angeordnet, die mit der Steuer- und Auswerteeinrichtung 46 über in den Figuren nicht gezeigte Schnittstellen und schematisch gezeigte Signalverbindungen verbunden sind. Von einem entlang des Transportpfads 36 transportierten Wertdokument 12, welches mit Ultraschallpulsen der Ultraschallsender 52 beschallt wird, detektieren die Ultraschallempfänger 54 die Ultraschall-Messwerte des Wertdokuments.

Jedem der Ultraschallsender 52 ist dabei einer der Ultraschallempfänger 54 so zugeordnet, dass sich zwischen diesen eine Ultraschallstrecke 56 ergibt, entlang der ein von dem jeweiligen Ultraschallsender 52 abgegebener Ultraschallpuls durch das zu prüfende Wertdokument hindurch zu dem diesem zugeordneten Ultraschallempfänger 54 läuft. Mit jedem Paar von Ultraschallsendern und diesen zugeordneten Ultraschallempfängern bzw. mit jeder Ultraschallstrecke 56 in Verbindung mit der Steuer- und Auswerteeinrichtung 46 ist damit ein Wert für den Ultraschall-Messwert des Wertdokuments 12 an dem mit dem Ultraschall beschallten Ort ermittelbar. Zur Erfassung der Ultraschall-Messwerte erfasst die Steuer- und Auswerteeinrichtung 46 in konstanten Zeitabständen die Sensorsignale der Ultraschallempfänger 54, die die Ultraschall-Messwerte einzelner empfangender Ultraschallpulse als Funktion der Zeit und damit wegen der konstanten Transportgeschwindigkeit auch des Ortes wiedergeben.

Die Ultraschallwandler 52 bzw. 54 sind so ausgebildet, dass sie zur Abgabe bzw. zum Empfang von Ultraschallpulsen mit einer Dauer im Bereich von im Beispiel etwa 30 µs und einer Ultraschallfrequenz, d.h. einem Frequenzmaximum des Spektrums des Ultraschallpulses, von im Beispiel etwa 400 kHz gut geeignet sind. Weiter sind sie so dimensioniert, dass jeweils ein mit den Ultraschallpulsen beschallter Fleck auf einem entlang des Transportpfads 36 transportierten Wertdokument 12 einen Durchmesser von etwa 2 mm aufweist. Jedem der Flecke ist als Messpunkt z.B. der Mittelpunkt des Flecks zugeordnet. Die jeweils ermittelte Ultraschall-Messwert wird dem Messpunkt, für den er erfasst wurde, zugeordnet gespeichert.

Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Bei anderen Ausführungsformen können die Ultraschallstrecken gegenüber der Ebene der zu untersuchenden Banknote auch geneigt sein, um bei der Verwendung von Ultraschallpulsen den Einfluss von Echos zu vermeiden.

Weiter kann der Ultraschall statt in Pulsen auch kontinuierlich abgegeben werden. In diesem Fall sind die Ultraschallstrecken gegenüber der zu untersuchenden Banknote vorzugsweise ebenfalls geneigt, um das Auftreten von stehenden Wellen zu vermeiden.

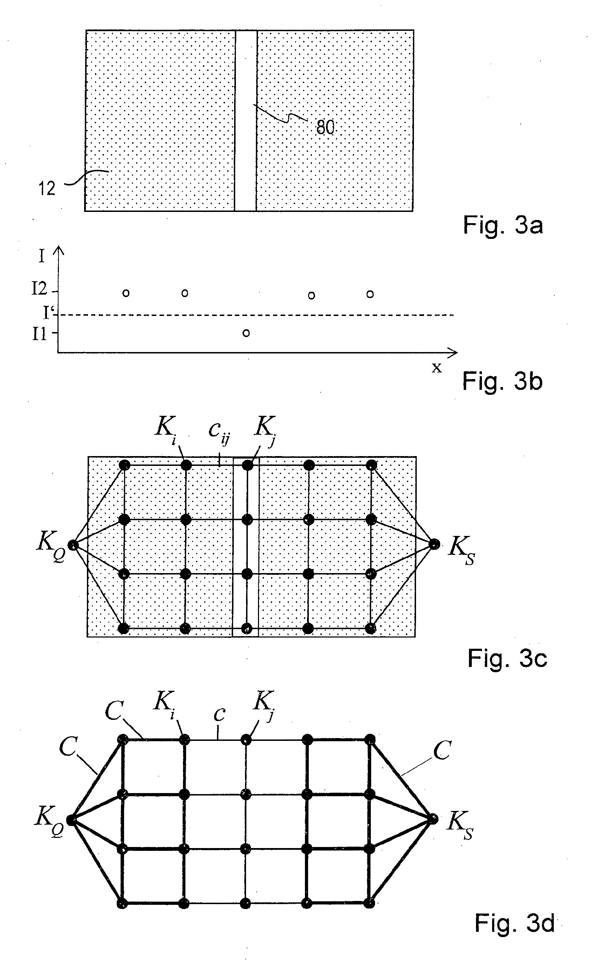

Die in Fig. 3a schematisch dargestellte Banknote 12 weist einen Klebestreifen 80 auf. Der Klebestreifen 80 kann sich über die gesamte Banknotenbreite erstrecken, kann aber auch einen kürzeren Abschnitt abdecken oder auch in einer anderen Orientierung auf der Banknote aufgeklebt sein, z.B. senkrecht oder schräg zur gezeigten Orientierung.

Ausgehend von den von dem Wertdokument ortsaufgelöst detektierten Ultraschall-Messwerten führt die Steuer- und Auswerteeinrichtung 46, genauer der Prozessor 48 nun bei der Abarbeitung von Programmcode des in dem Speicher 50 gespeicherten Computerprogramms, das folgende Verfahren zum Prüfen des Wertdokuments auf das Vorliegen einer Composed-Fälschung aus. In folgendem Beispiel wird angenommen, dass der der jeweils detektierte Ultraschall-Messwert die durch das Wertdokument transmittierte Ultraschall-Intensität ist. Alternativ oder zusätzlich zur Ultraschall-Intensität kann aber auch der Ultraschall-Phasenversatz als Ultraschall-Messwert verwendet werden.

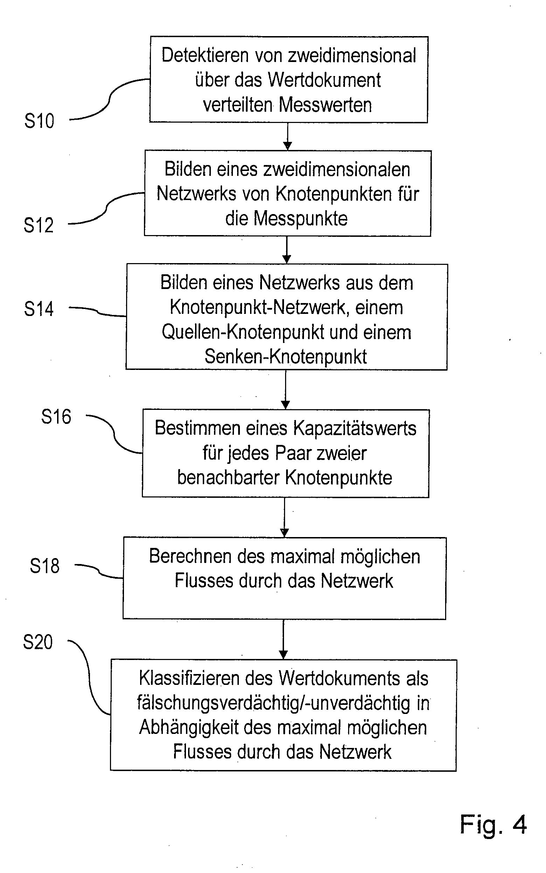

Zur Überprüfung der Banknote 12 werden zuerst die Ultraschall-Messwerte detektiert (Schritt S10, vgl. Figur 4). In diesem Beispiel wird die durch die Banknote 12 transmittierte Ultraschall-Intensität I herangezogen, die der Ultraschallsensor 44 an den Messpunkten detektiert. Die an den Messpunkten detektierten Ultraschall-Intensitäten werden in dem Speicher 50 der Steuer- und Auswerteeinrichtung 46 zwischengespeichert. Figur 3b zeigt beispielhaft die detektierte Ultraschall-Intensität I als Funktion der Position x an fünf Messpunkten entlang der Längsrichtung der Banknote 12. An den Messpunkten außerhalb des Klebestreifens 80 wird eine Ultraschall-Intensität I2 detektiert. Am dritten Messpunkt wird eine im Vergleich dazu reduzierte Ultraschall-Intensität I1 detektiert, da der Klebestreifen 80 dort für eine erhöhte Ultraschall-Absorption sorgt.

Für jeden der Messpunkte auf der Banknote wird ein Knotenpunkt K definiert, dem die an dem jeweiligen Messpunkt detektierte Ultraschall-Intensität I zugeordnet wird. Dabei erhält der Knotenpunkt entweder die detektierte Ultraschall-Intensität selbst oder die Ultraschall-Intensität abzüglich eines Offsets.

Im Beispiel der Figur 3c wird ein Netzwerk aus 20 Knotenpunkten K definiert, die regelmäßig über die Banknote 12 verteilt sind (Schritt S12). Der Knotenpunkt Kⱼ und auch die weiteren Knotenpunkte, die an der x-Position des Klebestreifens 80 liegen, weisen eine etwas geringere Ultraschall-Intensität auf als die übrigen Knotenpunkte des Netzwerks.

Zusätzlich zu den Knotenpunkten des Netzwerks wird ein Quellen-Knotenpunkt K_{Q} definiert, der links von den Knotenpunkten der linken Spalte des Netzwerks liegt, und ein Senken-Knotenpunkt Ks, der rechts von den Knotenpunkten der rechten Spalte des Netzwerks liegt. Der Quellen-Knotenpunkt K_{Q} bildet eine Quelle für einen Fluss durch das Netzwerk und der Senken-Knotenpunkt Ks eine Senke für diesen Fluss. Mittels eines numerischen Verfahrens wird der maximal mögliche Fluss durch das Netzwerk vom Quellen-Knotenpunkt K_{Q} zum Senken-Knotenpunkt Ks berechnet (Schritt S14).

Hierzu wird für jedes Paar zweier benachbarter Knotenpunkte des Netzwerks ein Kapazitätswert bestimmt, der ein Maß für den maximal möglichen Fluss zwischen den beiden benachbarten Knotenpunkten ist (Schritt S16). Zum Beispiel wird für die beiden Knotenpunkte Kᵢ und Kⱼ der Kapazitätswert cᵢⱼ bestimmt. Zum Bestimmen des jeweiligen Kapazitätswerts cᵢⱼ der zwei benachbarten Knotenpunkte des Netzwerks werden die beiden Ultraschall-Intensitäten Iᵢ und Iⱼ dieser beiden Knotenpunkte miteinander verglichen. Als Intensität Iᵢ, Iⱼ wird jeweils die gemessene Intensität abzüglich des oben genannten Offsets verwendet. Die, kleinere dieser beiden Ultraschall-Intensitäten (min(Iᵢ, Iⱼ)) wird mit einer Intensitätsschwelle I' verglichen. Falls die kleinere der beiden Ultraschall-Intensitäten min(Iᵢ, Iⱼ)) die Intensitätsschwelle I' überschreitet (und damit im Sollbereich B liegt), wird als Kapazitätswert eine relativ große Nennkapazität C>0 verwendet, und falls die kleinere der beiden Ultraschall-Intensitäten die Intensitätsschwelle I' nicht überschreitet (und damit unterhalb des Sollbereichs B liegt), wird als Kapazitätswert eine geringere Nennkapazität c, mit 0<c<C, verwendet. Für eine feine Abstufung der Kapazitätswerte kann für die Kapazität c ein kontinuierlicher Verlauf als Funktion des Messwerts gewählt werden. Zur Bestimmung der Kapazitätswerte wird z.B. eine stufenförmig ansteigende Funktion mit nichtabruptem stufenförmigen Verlauf verwendet, vgl. Fig. 5.

Den Verbindungslinien, die von dem Quellen-Knotenpunkt K_{Q} weggehen und den Verbindungslinien, die zu dem Senken-Knotenpunkt K_{S} hingehen, wird in jedem Fall die größere Kapazität C zugeordnet (unabhängig von der Ultraschall-Intensität des benachbarten Knotenpunkts des Netzwerks).

Für das in Fig. 3c eingezeichnete Knotenpunkt-Paar Kᵢ, Kⱼ liefert der Knotenpunkt Kⱼ die geringe der beiden Ultraschall-Intensitäten: min(Iᵢ, Iⱼ)=I1. Legt man die Intensitätsschwelle I' zugrunde, die zwischen I1 und I2 liegt, so ergibt sich für das Knotenpunkt-Paar Kᵢ, Kⱼ ein Kapazitätswert cᵢⱼ=c<C. Für die Knotenpunkt-Paare, bei denen beide Knotenpunkte eine Intensität oberhalb der Intensitätsschwelle I' aufweisen (min(Iᵢ, Iⱼ)≥I'), ergibt sich folglich jeweils der größere Kapazitätswert C. Die Kapazitätswerte, die sich für die Banknote 12 aus Figur 3a ergeben, sind in Figur 3d skizziert, wobei die Dicke der jeweiligen Verbindungslinie zwischen zwei benachbarten Knotenpunkten den jeweiligen Kapazitätswert repräsentiert. Diejenigen Verbindungslinien, die zu/von einem der Knotenpunkte der dritten Spalte hin- bzw. weggehen, erhalten so die geringe Kapazität c (dünne Verbindungslinie), die übrigen Verbindungslinien die größere Kapazität C (dickere Verbindungslinie).

Anschließend wird der maximal mögliche Fluss durch das Netzwerk berechnet, d.h. der größtmögliche Fluss, der von dem Quellen-Knotenpunkt K_{Q} durch das Netzwerk der Knotenpunkte hindurch zum Senken-Knotenpunkt K_{S} fließen kann (Schritt S18). Dies wird bevorzugt mittels eines numerischen Optimierungsverfahrens durchgeführt. Beispielsweise wird dazu Hassin's Algorithmus verwendet, vgl. R. Hassin, Maximum flows in (s, t) planar networks, Information Processing Letters, Vol. 13, Nr. 3, pp. 107, 1981. Es sind aber auch andere Berechnungsverfahren verwendbar, durch die sich eine Maximierung des Flusses erreichen lässt. Die berechneten Kapazitätswerte bestimmen dabei den maximal möglichen Fluss, der zwischen jeweils zwei der Knotenpunkte möglich ist. Der tatsächliche Fluss, der sich zwischen zwei Knotenpunkten nach Maximieren des Flusses ergibt, kann höchstens so groß sein wie die Kapazität der Verbindungslinie zwischen diesen beiden Knotenpunkten. Dem numerischen Optimierungsverfahren werden folgende Bedingungen zugrunde gelegt:
a) dass der Fluss durch jede Verbindungslinie zwischen zwei Knotenpunkten höchstens so groß ist wie die Kapazität cᵢⱼ zwischen diesen zwei Knotenpunkten
b) dass für jeden der Knotenpunkte, ausgenommen für den Quellen-Knotenpunkt und den Senken-Knotenpunkt, gilt, dass der in den jeweiligen Knoten hineinfließenden Fluss gleich groß ist wie der aus dem jeweiligen Knoten herausfließende Fluss (Flusserhaltung)
c) dass der Fluss, der in den Senken-Knotenpunkt hineinfließt, genauso groß ist wie der Fluss, der aus dem Quellen-Knotenpunkt herausfließt.

Aus Figur 3d ist bereits ersichtlich, dass der Fluss, der von dem Quellen-Knotenpunkt K_{Q} durch das Netzwerk hindurch zum Senken-Knotenpunkt K_{S} möglich ist, durch die geringen Kapazitätswerte der Knotenpunkte im Bereich des Klebestreifens 80 begrenzt wird. Diese Knotenpunkte bilden einen "Flaschenhals" für den Fluss durch das Netzwerk.

In einem zweiten Ausführungsbeispiel wird als Messwert die durch das Wertdokument an dem jeweiligen Messpunkt hindurch transmittierte Lichtintensität verwendet, die unter Dunkelfeldbeleuchtung detektiert wurde. Bekanntermaßen können mit einer Dunkelfeld-Transmissionsmessung die Trennlinien, an denen Composed-Fälschungen zusammengesetzt sind, aufgefunden werden, vgl. dazu WO-2011147575-A1. Es wurde herausgefunden, wenn die beiden Wertdokumentteile an der Trennlinie geringfügig voneinander beabstandet sind, dass sich an dieser Trennlinie üblicherweise eine erhöhte Dunkelfeld-Transmissionsintensität ergibt. Eine erhöhte Transmissionsintensität wird dabei unabhängig davon detektiert, ob die durchgehende Trennlinie vollständig oder teilweise durch einen Klebestreifen abgedeckt ist oder nicht. Bei geringfügigem Überlapp der beiden Wertdokumentteile dagegen eine reduzierte Dunkelfeld-Transmissionsintensität.

Für die im Normalfall von dem Wertdokument zu erwartende Transmissionsintensität wird gemäß dem zweiten Ausführungsbeispiel ein Sollwert S und einen diesen umgebender Sollbereich B angenommen, die lokal für die jeweiligen Region des Wertdokuments oder auch für das gesamte Wertdokument gelten können, vgl. Fig. 6. Die Lage des Sollwerts S und die Breite des Sollbereichs B basieren auf den üblicherweise bei dem jeweiligen Wertdokument detektierten Transmissionsintensitäten. Die beiden in Fig. 6 eingezeichneten Intensitäten Iᵢ, Iⱼ sind die Dunkelfeld-Transmissionsintensitäten zweier benachbarter Knotenpunkte Kᵢ, Kⱼ an einer Trennlinie T einer Composed Fälschung (vgl. Fig. 6 rechts oben), an der die Wertdokumentteile voneinander beabstandet sind. In Fig. 6 rechts oben ist beispielhaft ein Netzwerk aus Knotenpunkten (schwarze Punkte) eingezeichnet, die über die Composed-Fälschung verteilt sind. Der Messwert Iⱼ wurde an einem direkt auf der Trennlinie T liegenden Knotenpunkt Kⱼ detektiert, der Messwert Iᵢ an einem neben rechts der Trennlinie T liegenden Knotenpunkt Kᵢ. Auf der Trennlinie T der beiden Wertdokumentteile wird demzufolge eine deutlich höhere Transmissionsintensität Iⱼ detektiert (im Vergleich zur Intensität Iᵢ und im Vergleich zum Sollbereich B). Im Beispiel der Fig. 6 ist also der Messwert Iⱼ derjenige der beiden Messwerte Iᵢ, Iⱼ, der die größeren Abweichung vom Sollwert S aufweist. Entsprechend wird der Verbindungslinie zwischen dem Knotenpunkt-Paar Kᵢ, Kⱼ, der Kapazitätswert cⱼ zugeordnet, wie er sich für Iⱼ aus dem Kurvenverlauf in Fig. 6 ergibt. In diesem Fall führt der Knotenpunkt Kⱼ an der Trennlinie zu einer reduzierten Kapazität cⱼ<C, die den Fluss durch das Netzwerk limitiert.

Andernfalls, falls die beiden Wertdokumentteile der Composed-Fälschung an der Trennlinie T leicht überlappen, würde der Messwert, der direkt auf dieser Trennlinie detektiert wird, eine geringere Dunkelfeld-Transmissionsintensität zeigen im Vergleich zum Sollbereich B, d.h. links vom Sollbereich B in Fig. 6 liegen. Auch in diesem Fall hätte dieser Messwert die größere Abweichung zum Sollwert S als ein danebenliegend detektierter Messwert (Iᵢ). Auch in diesem Fall bestimmt der auf der Trennlinie detektierte Intensitätswert Iⱼ die Kapazität der Verbindungslinie zwischen den Knotenpunkten i und j. Auch in diesem Fall führt der Knotenpunkt j an der Trennlinie T zu einer reduzierten Kapazität cⱼ<C, die den Fluss durch das Netzwerk limitiert.

Nachdem die Kapazitätswerte aller Knotenpunkt-Paare bestimmt wurden, wird der bei diesen Kapazitäten maximal mögliche Fluss durch das Netzwerk unter den oben genannten Randbedingungen ermittelt. Der berechnete maximal mögliche Fluss wird dann zur Klassifizierung des Wertdokuments verwendet. Falls sich ein großer maximal möglicher Fluss ergibt, z.B. ein Fluss der eine vorgegebenen Flussschwelle erreicht oder überschreitet, so wird daraus geschlossen, dass das Wertdokument keinen Klebestreifen bzw. keine Trennlinie aufweist. Liegt der maximal mögliche Fluss dagegen unterhalb der vorgegebenen Flussschwelle, so wird das jeweilige Wertdokument als fälschungsverdächtig klassifiziert und aussortiert.

## Patentansprüche

1. Verfahren zum Prüfen eines Wertdokuments, mit folgenden Schritten:
- ortsaufgelöstes Detektieren von Messwerten (Iᵢ, Iⱼ) an einer Vielzahl verschiedener Messpunkte auf dem Wertdokument, die zweidimensional über das Wertdokument verteilt sind,
- Bilden eines zweidimensionalen Netzwerks von Knotenpunkten (Kᵢ, Kⱼ), wobei jeder Knotenpunkt einem Messpunkt auf dem Wertdokument entspricht, und Zuordnen des an dem jeweiligen Messpunkt detektierten Messwerts zu dem diesem Messpunkt entsprechenden Knotenpunkt,
- Erstellen zweier zusätzlicher Knotenpunkte, die an zwei einander gegenüberliegenden Seiten des zweidimensionalen Netzwerkes angeordnet sind, und Verbinden der zwei zusätzlichen Knotenpunkte mit dem zweidimensionalen Netzwerk der Knotenpunkte (Kᵢ, Kⱼ), wobei einer der zusätzlichen Knotenpunkte ein Quellen-Knotenpunkt (K_{Q}) ist, der eine Quelle für einen Fluss durch das Netzwerk bildet, und der andere ein Senken-Knotenpunkt (K_{S}) ist, der eine Senke für einen Fluss durch das Netzwerk bildet, wobei zwischen dem Quellen-Knotenpunkt und den diesem benachbarten Knotenpunkt des Netzwerks und zwischen dem Senken-Knotenpunkt und den diesem benachbarten Knotenpunkten des Netzwerks jeweils eine Verbindungslinie besteht,
- Bestimmen jeweils eines Kapazitätswerts für jedes Paar aus zwei benachbarten Knotenpunkten (Kᵢ, Kⱼ) des Netzwerks, der ein Maß für den maximal möglichen Fluss zwischen den beiden benachbarten Knotenpunkten ist, durch miteinander vergleichen der Messwerte (Iᵢ, Iⱼ) von jeweils zwei benachbarten Knotenpunkten (Kᵢ, Kⱼ) des Netzwerks, Ermitteln jeweils eines Kapazitätswerts (cᵢⱼ) für jedes der Paare benachbarter Knotenpunkte auf Basis dieses Vergleichs und Zuordnen des jeweiligen Kapazitätswerts (cᵢⱼ) zu einer Verbindungslinie zwischen den beiden benachbarten Knotenpunkten (Kᵢ, Kⱼ) des jeweiligen Paars benachbarter Knotenpunkte, deren Messwerte miteinander verglichen wurden, wobei, zum Bestimmen des jeweiligen Kapazitätswerts (cᵢⱼ) der jeweiligen zwei benachbarten Knotenpunkte (Kᵢ, Kⱼ) des Netzwerks, die Messwerte (Iᵢ, Iⱼ) dieser beiden Knotenpunkte mit einem Sollwert (S) / einem Sollbereich (B) des jeweiligen Messwerts verglichen werden und der Kapazitätswert (cᵢⱼ) in Abhängigkeit desjenigen dieser beiden Messwerte (Iᵢ, Iⱼ) gewählt wird, der eine größere Abweichung von dem Sollwert (S)/von dem Sollbereich (B) aufweist als der andere der beiden Messwerte (Iᵢ, lⱼ),
- Berechnen des maximal möglichen Flusses von dem Quellen-Knotenpunkt (K_{Q}) durch das Netzwerk hindurch zu dem Senken-Knotenpunkt (K_{S}) auf Basis der ermittelten Kapazitätswerte (cᵢⱼ), wobei zum Berechnen des maximal möglichen Flusses ein numerisches Optimierungsverfahren verwendet wird, bei dem der Fluss durch das Netzwerk unter den folgenden Bedingungen maximiert wird:
a) dass der Fluss durch jede Verbindungslinie zwischen zwei Knotenpunkten höchstens so groß ist wie die Kapazität (cᵢⱼ) zwischen diesen zwei Knotenpunkten, und
b) dass für jeden der Knotenpunkte, ausgenommen für den Quellen-Knotenpunkt und den Senken-Knotenpunkt, gilt, dass der in den jeweiligen Knoten hineinfließende Fluss gleich groß ist wie der aus dem jeweiligen Knoten herausfließende Fluss, und
c) dass der Fluss, der in den Senken-Knotenpunkt hineinfließt, genauso groß ist wie der Fluss, der aus dem Quellen-Knotenpunkt herausfließt,
- Klassifizieren des Wertdokuments als fälschungsverdächtig oder nicht-fälschungsverdächtig in Abhängigkeit des berechneten maximal möglichen Flusses durch das Netzwerk.

2. Verfahren nach Anspruch 1, **dadurch gekennzeichnet, dass**, zum Prüfen des Wertdokuments, der maximal mögliche Fluss durch das Netzwerk mit einer Flussschwelle verglichen wird und das Wertdokument als fälschungsverdächtig im Hinblick auf das Vorliegen einer Composed-Fälschung klassifiziert wird, falls der maximal mögliche Fluss die Flussschwelle unterschreitet oder erreicht und als nicht-fälschungsverdächtig im Hinblick auf das Vorliegen einer Composed-Fälschung klassifiziert wird, falls der maximal mögliche Fluss die Flussschwelle überschreitet.

3. Verfahren nach einem der vorhergehenden Ansprüche, **dadurch gekennzeichnet, dass** bei dem numerischen Optimierungsverfahren ein minimaler Schnitt durch das Netzwerk ermittelt wird, welcher einen "Flaschenhals" für den Fluss durch das Netzwerk bildet, und dass in dem Fall, wenn das Wertdokument als fälschungsverdächtig klassifiziert wird, die Position des minimalen Schnitts durch das Netzwerk zur Bestimmung der Position eines Klebestreifens (80)/einer Trennlinie (T) des Wertdokuments verwendet wird.

4. Verfahren nach einem der vorhergehenden Ansprüche, **dadurch gekennzeichnet, dass** dem jeweiligen Knotenpunkt der an dem jeweiligen Messpunkt detektierte Messwert abzüglich eines im Rahmen eines parametrischen Modells für den jeweiligen Messpunkt erwarteten Messwerts zugeordnet wird.

5. Verfahren nach einem der vorhergehenden Ansprüche, **dadurch gekennzeichnet, dass** der maximal mögliche Fluss durch das Netzwerk entlang einer Richtung berechnet wird, die auf dem Wertdokument der Richtung entspricht, die senkrecht zur Längsrichtung typischer Klebestreifen (80)/ typischer Trennlinien (T) verläuft, beispielsweise dass der maximal mögliche Fluss entlang einer Richtung berechnet wird, die der Längsrichtung des Wertdokuments entspricht.

6. Verfahren nach einem der vorhergehenden Ansprüche, **dadurch gekennzeichnet, dass** der maximal mögliche Fluss durch das Netzwerk sowohl für eine erste Richtung durch das Netzwerk, als auch für eine zur ersten Richtung senkrecht verlaufende zweite Richtung berechnet wird.

7. Verfahren nach Anspruch 6, **dadurch gekennzeichnet,**
- **dass** für die erste Richtung ein erster maximal möglicher Fluss durch das Netzwerk berechnet wird und für die zweite Richtung ein zweiter maximal möglicher Fluss durch das Netzwerk berechnet wird,
- **dass** der erste maximal mögliche Fluss durch das Netzwerk auf Basis der Anzahl der Knotenpunkte, die das Netzwerk entlang der ersten Richtung aufweist, normiert wird,
- **dass** der zweite maximal mögliche Fluss durch das Netzwerk auf Basis der Anzahl der Knotenpunkte, die das Netzwerk entlang der zweiten Richtung aufweist, normiert wird,
- **dass** der normierte erste maximal mögliche Fluss und der normierte zweite maximal mögliche Fluss miteinander verglichen werden und das Wertdokument in Abhängigkeit des kleineren der beiden normierten maximal möglichen Flüsse als fälschungsverdächtig oder nicht fälschungsverdächtig klassifiziert wird.

8. Verfahren nach einem der vorhergehenden Ansprüche, **dadurch gekennzeichnet, dass** der Kapazitätswert (cᵢⱼ) dadurch gewählt wird, dass für den Kapazitätswert (cᵢⱼ), als Funktion des Messwerts mit der größeren Abweichung von dem Sollwert/von dem Sollbereich, eine stufenförmige Funktion angenommen wird, die in einem den Sollwert (S) umgebenden Sollbereich (B) ihren maximalen Wert (C) aufweist und die, als Funktion des Messwerts mit der größeren Abweichung, auf einer Seite oder auf beiden Seiten des Sollbereichs (B) stufenförmig abfällt.

9. Verfahren nach Anspruch 8, **dadurch gekennzeichnet, dass**, zum Bestimmen des jeweiligen Kapazitätswerts (cᵢⱼ) der zwei benachbarten Knotenpunkte des Netzwerks, falls der Messwert mit der größeren Abweichung innerhalb des Sollbereichs (B) liegt, als Kapazitätswert (cᵢⱼ) eine Nennkapazität C>0 verwendet wird, und falls der Messwert mit der größeren Abweichung außerhalb des Sollbereichs (B) liegt, als Kapazitätswert (cᵢⱼ) eine Kapazität c verwendet wird, die geringer ist als die Nennkapazität C, wobei 0<c<C.

10. Verfahren nach einem der Ansprüche 8 bis 9, **dadurch gekennzeichnet, dass** die Lage des Sollwerts (S)/ des Sollbereichs (B) in Abhängigkeit eines durchschnittlichen Messwerts von mehreren auf dem Wertdokument detektierten Messwerten gewählt wird.

11. Verfahren nach einem der vorhergehenden Ansprüche, **dadurch gekennzeichnet, dass** die Messwerte Messwerte der elektromagnetischen Strahlung sind, die durch eine ortsaufgelöste elektromagnetische Messung des Wertdokuments detektiert werden, insbesondere durch eine ortsaufgelöste Transmissions-, Remissions- oder Lumineszenzmessung des Wertdokuments, z.B. im sichtbaren, UV- oder IR-Spektralbereich.

12. Verfahren nach einem der Ansprüche 1 bis 10, **dadurch gekennzeichnet, dass** die Messwerte Ultraschall-Messwerte sind, die durch eine ortsaufgelöste Ultraschall-Transmissions- oder Ultraschall-Remissionsmessung des Wertdokuments detektiert werden.

13. Verfahren nach einem der vorhergehenden Ansprüche, **dadurch gekennzeichnet, dass** die Messwerte kombinierte Messwerte sind, in die jeweils mindestens zwei verschiedene Messwerte des Wertdokuments einfließen, die mit verschiedenen Messmethoden ortsaufgelöst an dem Wertdokument detektiert wurden.

14. Prüfeinrichtung zur Prüfung von Wertdokumenten, die zur Durchführung eines Verfahrens nach einem der vorhergehenden Ansprüche ausgebildet ist, und umfasst:
- einen Sensor (44), der zum ortsaufgelösten Detektieren von Messwerten (Iᵢ, Iⱼ) ausgebildet ist, die an einer Vielzahl verschiedener Messpunkte auf dem Wertdokument (12) von dem jeweiligen Wertdokument detektiert werden, und
- eine Auswerteeinrichtung (46), die dazu ausgebildet ist, die Verfahrensschritte gemäß einem oder mehreren der vorhergehenden Ansprüche auszuführen und das Wertdokument (12) in Abhängigkeit des berechneten maximal möglichen Flusses durch das Netzwerk als fälschungsverdächtig oder nicht-fälschungsverdächtig zu klassifizieren.

15. Vorrichtung zur Bearbeitung von Wertdokumenten mit
- einer Zuführeinrichtung (14) für zu bearbeitende Wertdokumente,
- einer Ausgabeeinrichtung (16) für Wertdokumente, die wenigstens zwei Ausgabeabschnitte zur Aufnahme bearbeiteter Wertdokumente aufweist,
- einer Transporteinrichtung zum Transportieren der Wertdokumente von der Zuführeinrichtung entlang eines Transportpfades zu der Ausgabeeinrichtung,
- einer Prüfeinrichtung nach Anspruch 14, die so angeordnet ist, dass der Transportpfad des Wertdokuments (12) durch einen Erfassungsbereich des Sensors (44) der Prüfeinrichtung verläuft, und
- einer Steuereinrichtung (46), die dazu ausgebildet ist, die Transporteinrichtung für jedes von der Transporteinrichtung transportierte Wertdokument so anzusteuern, dass das jeweilige Wertdokument (12), in Abhängigkeit von der durch die Prüfvorrichtung vorgenommenen Klassifizierung, in einen ersten Ausgabeabschnitt oder in einen zweiten der Ausgabeabschnitte der Vorrichtung transportiert wird.

## Claims

1. A method for checking a value document, having the following steps of:
- detecting in spatially resolved fashion measuring values (Iᵢ, Iⱼ) in a plurality of different measuring points on the value document which are distributed over the value document two-dimensionally,
- forming a two-dimensional network of nodes (Kᵢ, Kⱼ), wherein each node corresponds to a measuring point on the value document, and allocating the measuring value detected at the respective measuring point to the node corresponding to this measuring point,
- creating two additional nodes arranged on two mutually opposing sides of the two-dimensional network, and connecting the two additional nodes with the two-dimensional network of nodes (Kᵢ, Kⱼ), wherein one of the additional nodes is a source node (K_{Q}) forming a source for a flow through the network, and the other one is a sink node (K_{S}) forming a sink for a flow through the network, wherein a connecting line exists in each case between the source node and the node of the network adjacent thereto and between the sink note and the nodes of the network adjacent thereto,
- determining respectively one capacity value for each pair of two adjacent nodes (Kᵢ, Kⱼ) of the network, said capacity value being a measure of the maximally possible flow between the two adjacent nodes, by mutually comparing the measuring values (Iᵢ, Iⱼ) of respectively two adjacent nodes (Kᵢ, Kⱼ) of the network, ascertaining respectively one capacity value (cᵢⱼ) for each of the pairs of adjacent nodes on the basis of this comparison and allocating the respective capacity value (cᵢⱼ) to a connecting line between the two adjacent nodes (Kᵢ, Kⱼ) of the respective pair of adjacent nodes whose measuring values have been mutually compared,
wherein, for determining the respective capacity value (cᵢⱼ) of the respective two adjacent nodes (Kᵢ, Kⱼ) of the network, the measuring values (Iᵢ, Iⱼ) of these two nodes are compared to a target value (S)/ a target range (B) of the respective measuring value and the capacity value (cᵢⱼ) is chosen in dependence on that one of these two measuring values (Iᵢ, Iⱼ) that has a larger deviation from the target value (S)/ from the target range (B) than the other one of the two measuring values (Iᵢ, Iⱼ),
- computing the maximally possible flow from the source node (K_{Q}) through the network to the sink node (K_{S}) on the basis of the ascertained capacity values (cᵢⱼ), wherein for computing the maximally possible flow a numerical optimization method is employed in which the flow through the network is maximized under the following conditions:
a) that the flow through each connecting line between two nodes is at most as great as the capacity (cᵢⱼ) between these two nodes, and
b) that for each of the nodes, with the exception of the source node and the sink node, it is valid that the flow flowing into the respective node is as great as the flow flowing out of the respective node, and
c) that the flow flowing into the sink node is as great as the flow flowing out of the source node,
- classifying the value document as suspected of forgery or not suspected of forgery in dependence on the computed maximally possible flow through the network.

2. The method according to claim 1, **characterized in that,** for checking the value document, the maximally possible flow through the network is compared to a flow threshold and the value document is classified as suspected of forgery in view of the presence of a composed forgery, if the maximally possible flow undershoots or reaches the flow threshold, and as not suspected of forgery in view of the presence of a composed forgery, if the maximally possible flow overshoots the flow threshold.

3. The method according to either of the preceding claims, **characterized in that** in the numerical optimization method a minimum cut through the network is ascertained that forms a "bottleneck" for the flow through the network, and that in the case that the value document is classified as suspected of forgery, the position of the minimum cut through the network is employed for determining the position of an adhesive strip (80)/ a separating line (T) of the value document.

4. The method according to any of the preceding claims, **characterized in that** to the respective node there is allocated the measuring value detected at the respective measuring point minus the measuring value expected for the respective measuring point within the framework of a parametric model.

5. The method according to any of the preceding claims, **characterized in that** the maximally possible flow through the network is computed along a direction which on the value document corresponds to that direction which extends perpendicularly to the longitudinal direction of typical adhesive strips (80)/ typical separating lines (T), for example that the maximally possible flow is computed along a direction that corresponds to the longitudinal direction of the value document.

6. The method according to any of the preceding claims, **characterized in that** the maximally possible flow through the network is computed both for a first direction through the network and for a second direction extending perpendicularly to the first direction.

7. The method according to claim 6, **characterized in that**
- for the first direction a first maximally possible flow through the network is computed, and for the second direction a second maximally possible flow through the network is computed,
- the first maximally possible flow through the network is normalized on the basis of the number of nodes which the network has along the first direction,
- the second maximally possible flow through the network is normalized on the basis of the number of nodes which the network has along the second direction,
- the normalized first maximally possible flow and the normalized second maximally possible flow are mutually compared and the value document is classified as suspected of forgery or not suspected of forgery in dependence on the smaller one of the two normalized maximally possible flows.

8. The method according to any of the preceding claims, **characterized in that** the capacity value (cᵢⱼ) is chosen by assuming for the capacity value (cᵢⱼ) as a function of the measuring value that deviates more strongly from the target value/ from the target range a stepped function which has its maximal value (C) in a target range (B) surrounding the target value (S) and which, as a function of the measuring value deviating more strongly, declines in stepped fashion on one side or on both sides of the target range (B).

9. The method according to claim 8, **characterized in that** for determining the respective capacity value (cᵢⱼ) of the two adjacent nodes of the network, if the more strongly deviating measuring value lies within the target range (B), a nominal capacity C > 0 is employed as the capacity value (cᵢⱼ), and, if the more strongly deviating measuring value lies outside of the target range (B), a capacity c is employed as the capacity value (cᵢⱼ), which is smaller than the nominal capacity C, wherein 0 < c < C.

10. The method according to either of claims 8 to 9, **characterized in that** the position of the target value (S)/ of the target range (B) is chosen in dependence on an average measuring value of several measuring values detected on the value document.

11. The method according to any of the preceding claims, **characterized in that** the measuring values are measuring values of the electromagnetic radiation that are detected by a spatially resolved electromagnetic measurement of the value document, in particular by a spatially resolved transmission, remission or luminescence measurement of the value document, e.g. in the visible, UV or IR spectral range.

12. The method according to any of claims 1 to 10, **characterized in that** the measuring values are ultrasound measuring values detected through a spatially resolved ultrasound-transmission or ultrasound-remission measurement of the value document.

13. The method according to any of the preceding claims, **characterized in that** the measuring values are combined in which respectively at least two different measuring values of the value document are incorporated which were detected on the value document in spatially resolved fashion by different measuring methods.

14. A checking device for checking value documents which is configured to carry out a method according to any of the preceding claims and comprises:
- a sensor (44) configured to detect in spatially resolved fashion measuring values (Iᵢ, Iⱼ) that are detected at a plurality of different measuring points on the value document (12) of the respective value document, and
- an evaluation device (46) configured to execute the method steps according to one of several of the preceding claims and to classify the value document (12) as suspected of forgery or not suspected of forgery in dependence on the computed maximally possible flow through the network.

15. An apparatus for processing value documents, with
- a feeding device (14) for value documents to be processed,
- an output device (16) for value documents, having at least two output sections for accommodating processed value documents,
- a transport device for transporting the value documents from the feeding device along a transport path to the output device,
- a checking device according to claim 14 that is arranged such that the transport path of the value document (12) extends through a capture region of the sensor (44) of the checking device, and
- a control device (46) configured to so drive the transport device for each of the value documents transported by the transport device that the respective value document (12), in dependence on the classification effected by the checking apparatus, is transported into a first output section or into a second one of the output sections of the apparatus.

## Revendications

1. Procédé de vérification d'un document de valeur, comprenant les étapes suivantes :
- détection à résolution spatiale de valeurs de mesure (Iᵢ, Iⱼ) à une pluralité de points de mesure différents sur le document de valeur répartis de manière bidimensionnelle sur le document de valeur,
- constitution d'un réseau bidimensionnel de points nodaux (Kᵢ, Kⱼ), chaque point nodal correspondant à un point de mesure sur le document de valeur, et affectation, de la valeur de mesure détectée au point de mesure respectif, au point nodal correspondant à ce point de mesure,
- établissement de deux points nodaux supplémentaires agencés à deux côtés opposés entre eux du réseau bidimensionnel, et liaison des deux points nodaux supplémentaires avec le réseau bidimensionnel de points nodaux (Kᵢ, Kⱼ), cependant que le un des points nodaux supplémentaires est un point nodal source (K_{Q}) constituant une source pour un flux à travers le réseau, et que l'autre est un point nodal puits (K_{S}) constituant un puits pour un flux à travers le réseau, cependant que, entre le point nodal source et les point nodaux du réseau qui l'avoisinent, et
entre le point nodal puits et les point nodaux du réseau qui l'avoisinent, il y a respectivement une ligne de liaison,
- détermination de, pour chaque paire de points nodaux (Kᵢ, Kⱼ) avoisinants, respectivement une valeur de capacité qui est une mesure pour le flux maximal possible entre les deux points nodaux avoisinants, par comparaison entre elles des valeurs de mesure (Iᵢ, Iⱼ) de respectivement deux points nodaux (Kᵢ, Kⱼ) avoisinants du réseau, établissement de respectivement une valeur de capacité (cᵢⱼ) pour chacune des paires de points nodaux avoisinants, sur la base de cette comparaison, et affectation de la valeur de capacité (cᵢⱼ) respective à une ligne de liaison entre les deux points nodaux (Kᵢ, Kⱼ) avoisinants de la paire respective de points nodaux avoisinants dont les valeurs de mesure ont été comparées entre elles, cependant que, pour la détermination de la valeur de capacité (cᵢⱼ) respective des respectivement deux points nodaux (Kᵢ, Kⱼ) avoisinants du réseau, les valeurs de mesure (Iᵢ, Iⱼ) de ces deux points nodaux sont comparées avec une valeur prescrite (S) / une zone prescrite (B) de la valeur de mesure respective, et que la valeur de capacité (cᵢⱼ) est choisie en fonction de celle de ces deux valeur de mesure (Iᵢ, Iⱼ) qui présente un plus grand écart par rapport à la valeur prescrite (S) / par rapport à la zone prescrite (B) de la valeur de mesure respective que l'autre des deux valeurs de mesure (Iⱼ, Iⱼ),
- calcul du flux maximal possible depuis le point nodal source (K_{Q}), à travers le réseau, jusqu'au point nodal puits (K_{S}) sur la base des valeurs de capacité (cᵢⱼ) établies, cependant que, pour le calcul du flux maximal possible, un procédé d'optimisation numérique est utilisé, dans lequel le flux à travers le réseau est maximisé sous les conditions suivantes :
a) que le flux à travers chaque ligne de liaison entre deux points nodaux est au maximum aussi élevé que la capacité (cᵢⱼ) entre ces deux points nodaux, et
b) que, pour chacun des points nodaux, à l'exception de pour le point nodal source et de pour le point nodal puits, il est entendu que le flux qui s'introduit dans le nœud respectif est aussi élevé que le flux qui s'échappe du nœud respectif, et
c) que le flux qui s'introduit dans le point nodal puits est aussi élevé que le flux qui s'échappe du point nodal source,
- classification du document de valeur en tant que suspect de contrefaçon ou non suspect de contrefaçon, en fonction du flux maximal possible calculé à travers le réseau.

2. Procédé selon la revendication 1, **caractérisé en ce que**, pour la vérification du document de valeur, le flux maximal possible à travers le réseau est comparé avec un seuil de flux, et que le document de valeur est classifié en tant que suspect de contrefaçon quant à la présence d'une contrefaçon par composition si le flux maximal possible reste en-dessous ou atteint le seuil de flux, et est classifié en tant que non suspect de contrefaçon quant à la présence d'une contrefaçon par composition si le flux maximal possible dépasse le seuil de flux.

3. Procédé selon une ou plusieurs des revendications précédentes, **caractérisé en ce que**, dans le procédé d'optimisation numérique, une coupe minimale à travers le réseau est établie, laquelle constitue un « goulot » pour le flux à travers le réseau, et que, dans le cas où le document de valeur est classifié en tant que suspect de contrefaçon, la position de la coupe minimale à travers le réseau est utilisée pour la détermination de la position d'un ruban adhésif (80) / d'une ligne de séparation (T) du document de valeur.

4. Procédé selon une des revendications précédentes, **caractérisé en ce que**, au point nodal respectif, la valeur de mesure détectée au point de mesure respectif est affectée déduction faite d'une valeur de mesure attendue dans le cadre d'un modèle paramétrique pour le point de mesure respectif.

5. Procédé selon une des revendications précédentes, **caractérisé en ce que** le flux maximal possible à travers le réseau est calculé le long d'une direction qui, sur le document de valeur, correspond à la direction perpendiculaire à la direction longitudinale de rubans adhésifs typiques (80) / de lignes de séparation (T) typiques, par exemple que le flux maximal possible est calculé le long d'une direction qui correspond à la direction longitudinale du document de valeur.

6. Procédé selon une des revendications précédentes, **caractérisé en ce que** le flux maximal possible à travers le réseau est calculé tant pour une première direction à travers le réseau que pour une deuxième direction, perpendiculaire à la première direction.

7. Procédé selon la revendication 6, **caractérisé en ce**
- **que**, pour la première direction, un premier flux maximal possible à travers le réseau est calculé, et que pour la deuxième direction, un deuxième flux maximal possible à travers le réseau est calculé,
- **que** le premier flux maximal possible à travers le réseau est normalisé sur la base du nombre de points nodaux que le réseau comporte le long de la première direction,
- **que** le deuxième flux maximal possible à travers le réseau est normalisé sur la base du nombre de points nodaux que le réseau comporte le long de la deuxième direction,
- **que** le premier flux maximal possible normalisé et le deuxième flux maximal possible normalisé sont comparés entre eux et que le document de valeur, en fonction du plus petit des deux flux maximaux possibles normalisés, est classifié en tant que suspect de contrefaçon ou en tant que non suspect de contrefaçon.

8. Procédé selon une des revendications précédentes, **caractérisé en ce que** la valeur de capacité (cᵢⱼ) est choisie **en ce que**, pour la valeur de capacité (cᵢⱼ), comme fonction de la valeur de mesure ayant le plus grand écart par rapport à la valeur prescrite) / par rapport à la zone prescrite, une fonction en gradins est adoptée, laquelle présente sa valeur maximale (C) dans une zone prescrite (B) tournant autour de la valeur prescrite (S) et laquelle, en tant que fonction de la valeur de mesure présentant le plus grand écart, descend en gradins d'un côté ou des deux côtés de la zone prescrite (B).

9. Procédé selon la revendication 8, **caractérisé en ce que**, pour la détermination de la valeur de capacité (cᵢⱼ) respective des deux points nodaux avoisinants du réseau, si la valeur de mesure présentant le plus grand écart se trouve à l'intérieur de la zone prescrite (B), c'est une capacité nominale C> 0 qui est utilisée comme valeur de capacité (cᵢⱼ), et si la valeur de mesure présentant le plus grand écart se trouve à l'extérieur de la zone prescrite (B), c'est une capacité c inférieure à la capacité nominale C qui est utilisée comme valeur de capacité (cᵢⱼ), cependant que 0<c<C.

10. Procédé selon une des revendications de 8 à 9, **caractérisé en ce que** l'état de la valeur prescrite (S) / de la zone prescrite (B) est choisi en fonction d'une valeur moyenne de mesure de plusieurs valeurs de mesure détectées sur le document de valeur.

11. Procédé selon une des revendications précédentes, **caractérisé en ce que** les valeurs de mesure sont des valeurs de mesure du rayonnement électromagnétique qui sont détectées par une mesure électromagnétique à résolution spatiale du document de valeur, en particulier par une mesure à résolution spatiale de transmission, de réflectance ou de luminescence du document de valeur, par exemple dans la plage spectrale visible, UV ou IR.

12. Procédé selon une des revendications de 1 à 10, **caractérisé en ce que** les valeurs de mesure sont des valeurs de mesure ultrasoniques qui sont détectées par une mesure à résolution spatiale ultrasonique de transmission ou ultrasonique de réflectance du document de valeur.

13. Procédé selon une des revendications précédentes, **caractérisé en ce que** les valeurs de mesure sont des valeurs de mesure combinées dans lesquelles sont prises en compte au moins deux valeurs de mesure différentes du document de valeur détectées en résolution spatiale avec différentes méthodes sur le document de valeur.

14. Equipement de vérification de documents de valeur conçu pour la réalisation d'un procédé selon une des revendications précédentes et comprenant :
- un capteur (44) conçu pour la détection à résolution spatiale de valeurs de mesure (Iᵢ, Iⱼ) qui sont détectées à une pluralité de points de mesure différents sur le document de valeur (12) du document de valeur respectif,
- un équipement d'évaluation (46) conçu pour exécuter les étapes du procédé selon une ou plusieurs des revendications précédentes et pour classifier le document de valeur (12) en tant que suspect de contrefaçon ou non suspect de contrefaçon en fonction du flux maximal possible calculé à travers le réseau.

15. Dispositif de traitement de documents de valeur ayant
- un équipement d'amenée (14) pour documents de valeur à traiter,
- un équipement de délivrance (16) pour documents de valeur qui comporte au moins deux sections de délivrance pour le logement de documents de valeur traités,
- un équipement de transport pour le transport des documents de valeur de l'équipement d'amenée à l'équipement de délivrance, le long d'un chemin de transport,
- un équipement de vérification selon la revendication 14, lequel est agencé de telle façon que le chemin de transport du document de valeur (12) passe par une zone de saisie du capteur (44) de l'équipement de vérification, et
- un équipement de commande (46) conçu pour commander l'équipement de transport de telle façon pour chaque document de valeur transporté par l'équipement de transport que le document de valeur (12) respectif est, en fonction de la classification effectuée par l'équipement de vérification, transporté dans une première section de délivrance ou dans une deuxième des sections de délivrance du dispositif.
